(19) **Europäisches Patentamt / European Patent Office / Office européen des brevets**

(11) **EP 4 078 217 B1**

(12) **FASCICULE DE BREVET EUROPEEN**

(45) Date de publication et mention de la délivrance du brevet:
**28.02.2024 Bulletin 2024/09**

(21) Numéro de dépôt: **20824279.2**

(22) Date de dépôt: **17.12.2020**

(51) Classification Internationale des Brevets (IPC):
**G01S 7/481** *(2006.01)* **G01S 7/48** *(2006.01)*
**G01S 7/4912** *(2020.01)* **G01S 17/32** *(2020.01)*
**G01S 17/42** *(2006.01)*

(52) Classification Coopérative des Brevets (CPC):
**G01S 7/4815; G01S 7/4817; G01S 17/32; G01S 17/42**

(86) Numéro de dépôt international:
**PCT/EP2020/086815**

(87) Numéro de publication internationale:
**WO 2021/123016 (24.06.2021 Gazette 2021/25)**

(54) **SYSTEME LIDAR COMPRENANT DEUX COMPOSANTS DIFFRACTIFS**

LIDAR-SYSTEM MIT ZWEI DIFFRAKTIVEN KOMPONENTEN

LIDAR SYSTEM COMPRISING TWO DIFFRACTIVE COMPONENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2019 FR 1914898**

(43) Date de publication de la demande:
**26.10.2022 Bulletin 2022/43**

(73) Titulaires:
- **THALES**
  **92190 Meudon (FR)**
- **Commissariat à l'Energie Atomique et aux Energies Alternatives**
  **75015 Paris (FR)**

(72) Inventeur: **DUPORT, François**
**91767 PALAISEAU CEDEX (FR)**

(74) Mandataire: **Atout PI Laplace**
**Immeuble "Visium"**
**22, avenue Aristide Briand**
**94117 Arcueil Cedex (FR)**

(56) Documents cités:
**CN-U- 209 417 296      US-A1- 2019 257 927**
**US-A1- 2019 383 940**

## Description

### Domaine technique :

L'invention relève du domaine de la détection par lidar cohérent.

### Technique antérieure :

Les lidars utilisent la lumière pour mesurer la distance et éventuellement la vitesse d'objets ou de cibles. A l'instar des radars, les systèmes lidar nécessitent de sonder l'espace avec un faisceau optique pour réaliser une détection sur deux ou trois dimensions de la scène observée. En général, cela consiste à balayer l'espace avec un faisceau optique. Il en résulte un temps de balayage qui peut éventuellement être néfaste pour certaines applications. En effet, pendant que le faisceau est dirigé vers une direction donnée, les autres directions de la scène ne sont pas observées. De plus la zone couverte par le lidar et la rapidité de sa couverture dépendent des solutions choisies pour fabriquer le Lidar. Il s'agit un compromis entre plusieurs paramètres : la distance couverte par le lidar qui est proportionnelle à la puissance du laser utilisé, l'angle solide couvert par le lidar qui dépend du type d'application (surveillance alertée ou escorte par exemple), et enfin la rapidité avec laquelle le lidar sonde la zone couverte (qui dépend en général du type et de la vitesse des cibles recherchées).

Dans le cadre des systèmes lidar, le balayage de l'espace par un faisceau optique est souvent un paramètre limitant. Pour réaliser ce balayage trois solutions existent :

La première solution est principalement mécanique. Elle consiste à utiliser un couple émetteur laser et récepteur qui pointent tous les deux dans la même direction. L'ensemble est mobile afin de balayer l'espace. Il peut aussi s'agir d'un ou plusieurs miroirs mobiles qui permettent d'orienter le faisceau lumineux de l'émetteur laser et diriger le signal réfléchi sur le photodétecteur. Ces dispositifs de balayage peuvent éventuellement être miniaturisés en utilisant des MEMS optiques. Si cette solution à l'avantage de ne pas dépendre de la longueur d'onde utilisée pour le Lidar, elle nécessite cependant un alignement précis du système optique, et présente une grande sensibilité aux vibrations et aux accélérations ce qui limite fortement les applications envisageables.

La deuxième solution consiste à utiliser un système optique interférentiel pour défléchir le faisceau optique. Le principe est alors d'utiliser un montage optique interférentiel pour diriger la lumière dans une direction de l'espace donnée en fonction de la longueur d'onde. De manière générale, il s'agit de séparer le signal optique en plusieurs points et d'imposer un déphasage entre ces points. Les interférences entre les signaux provenant de ces points sont constructives dans une direction donnée. En variant le déphasage entre ces points, soit par l'utilisation de modulateurs de phase, soit en variant la longueur d'onde du laser utilisé, le système balaie la direction pointée par le faisceau optique. Cette solution à l'avantage de ne reposer sur aucune pièce mobile mais impose certaines contraintes sur la rapidité d'accord du laser et sa reproductibilité. De plus il n'est pas possible d'obtenir un balayage angulaire important sur deux axes, ce qui impose d'utiliser plusieurs systèmes interférentiels et de commuter leur utilisation pour obtenir le balayage désiré. Ces méthodes sont connues de l'homme du métier (voir US2018/052378 et DE102015225863).

La troisième solution consiste à utiliser une barrette de photodiodes. Chaque photodiode est en charge de détecter le signal optique provenant d'une direction donnée de la scène observée. Cette solution ne permet d'observer qu'un axe de la scène, soit une ligne, soit une colonne de l'image à réaliser. Par ailleurs, les solutions basées sur une matrice de photodétecteurs ne permettent pas de mesurer les vitesses des objets.

Il est aussi connu d'utiliser une combinaison de ces solutions. Par exemple les systèmes de US 2017/0269215A1 et WO2017/132704A1 utilisent des barrettes de photodétecteur montées sur une tourelle mobile.

US 2019/257927 A1 divulgue un système LIDAR comprenant un laser à peigne de fréquence multi-longueurs d'onde, un réseau de diffraction configuré pour diriger les différentes longueurs d'onde dans différentes directions, et une unité de réception. CN 209 417 296 U divulgue un système LIDAR comprenant un laser à peigne de fréquence et un élément diffractif configuré pour orienter les différentes longueurs d'onde émises dans différentes directions.

US 2019/383940 A1 divulgue un système LIDAR comprenant un laser à peigne de fréquence configuré pour détecter un signal de battement obtenu en hétérodynant le faisceau laser local avec une réflexion reçue.

Cependant, l'ensemble des solutions existantes de balayage de faisceau sont soit potentiellement sensibles aux vibrations pour les solutions mécaniques, soit proposent des angles de balayage assez inhomogènes. De plus toutes ces solutions, de par la nature même du balayage, ne permettent d'observer chaque direction de l'espace que par intermittence. Il y a donc un compromis à trouver fonction de la précision du balayage, de sa rapidité et de ses amplitudes.

L'invention vise à pallier certains des problèmes et des contraintes liés au balayage angulaire du faisceau laser dans un système lidar.

A cet effet, l'invention a pour objet un système tel que décrit par les revendications. L'invention a également pour objet un procédé d'utilisation d'un tel système.

### Résumé de l'invention :

Aussi, un objet de l'invention est un système lidar comprenant un ensemble laser comprenant au moins une source laser, et un système de détection optique pour détecter un rayonnement émis par l'ensemble laser et réfléchi par une scène à observer, caractérisé en ce que :

- l'ensemble laserest configuré pour émettre un premier faisceau comportant un premier peigne de longueurs d'onde distinctes $\lambda_i$, $i \in [1;m]$ et un deuxième faisceau comportant un deuxième peigne de longueurs d'onde distinctes $\lambda_j$, $j \in [n;p]$, différentes de celles du premier peigne ;

- le système lidar comprend également un premier composant optique diffractif configuré pour diriger le premier faisceau vers la scène à observer suivant une pluralité de directions différentes $\theta_i \in [1;n]$ pour chaque longueur d'onde $\lambda_i$ du premier peigne, lesdites directions étant situées dans un même plan *xz* dit azimutal, le rayonnement laser obtenu après diffraction du premier faisceau par le premier composant optique diffractif étant appelé premier rayonnement diffracté ;

- ledit système lidar comprend en outre un deuxième composant optique diffractif configuré pour diriger le deuxième faisceau vers la scène à observer suivant une pluralité de directions différentes $\phi_j \in [n;p]$ pour chaque longueur d'onde $\lambda_j$ du deuxième peigne, lesdites directions étant situées dans un même plan *yz* dit d'élévation non parallèle au plan *xz* azimutal, le rayonnement laser obtenu après diffraction du deuxième faisceau par le deuxième composant optique diffractif étant appelé deuxième rayonnement laser diffracté ;

- le système de détection optique comprend au moins une photodiode agencée de manière à détecter une portion du premier rayonnement diffracté réfléchie par la scène à observer, dite première portion réfléchie, et une portion du deuxième rayonnement diffracté réfléchie par la scène à observer, dite deuxième portion réfléchie, la photodiode étant configurée pour générer un signal comprenant les battements de chaque longueur d'onde $\lambda_i$, de la première portion réfléchie avec chaque longueur d'onde $\lambda_j$ de la deuxième portion réfléchie ; et

- le système lidar comprend en outre une unité de traitement du signal généré par la photodiode, configurée pour déterminer la position et/ou la vitesse radiale d'objets présents dans la scène à observer, à partir, au moins, d'une ou de fréquences desdits battements comprises dans ledit signal.

Selon des modes de réalisation particuliers :

- la ou les sources lasers de l'ensemble laser sont des sources lasers à onde continue avec une relation de phase fixe entre les longueurs d'onde émises, l'ensemble laser comprenant en outre des moyens adaptés pour effectuer une modulation en fréquence des longueurs d'ondes émises ;

- la ou les sources lasers de l'ensemble laser sont des sources lasers impulsionnelles ;

- l'ensemble laser est configuré pour qu'il n'existe pas deux couples de longueurs d'onde ($\lambda_{i1}$, $\lambda_{j1}$) et ($\lambda_{i2}$, $\lambda_{j2}$) tels que la fréquence du battement de ces deux couples de longueur d'onde soit identique, avec $\lambda_{i1}$ et $\lambda_{i2}$ des longueurs d'onde distinctes du premier peigne et $\lambda_{j1}$ et $\lambda_{j2}$ des longueurs d'onde distinctes du deuxième peigne ;

- l'ensemble laser est configuré pour que la largeur spectrale du deuxième peigne de longueurs d'onde ($LS_2$) soit inférieure à l'intervalle spectral libre du premier peigne de longueur d'onde ($\Delta f_1$) ;

- l'ensemble laser est configuré pour que la plus grande longueur d'onde du premier peigne de longueur d'onde soit inférieure à la plus petite longueur d'onde du deuxième peigne de longueur d'onde ou que la plus petite longueur d'onde du premier peigne de longueur d'onde soit supérieure à la plus grande longueur d'onde du deuxième peigne de longueur d'onde ;

- système de détection optique comprend en outre un système optique de collection permettant de focaliser sur la photodiode les rayons lumineux issus de la première et de la deuxième portion réfléchie ;

- chaque composant optique diffractif est un circuit optique intégré comprenant des guides d'onde débouchant sur des faces de sortie du circuit optique intégré et des lentilles divergentes aux faces de sortie ;

- la ou les sources laser émettent chacune une puissance totale laser supérieure à 1W ;

- l'ensemble laser est un oscillateur paramétrique optique comprenant une unique source laser pompant un cristal biréfringent disposé dans une cavité optiqueet configuré pour émettre un rayonnement présentant une première longueur d'onde et une deuxième longueur d'onde distinctes de la première longueur d'onde; l'ensemble laser étant de plus configuré pour faire varier temporellement lesdites première et deuxième longueurs d'onde de manière à former respectivement ledit premier et deuxième peigne de longueurs d'onde ;

- l'ensemble laser comprend deux sources lasers, une première source laser émettant ledit premier faisceau et une deuxième source laser émettant ledit deuxième faisceau ;

- la première source laser est une source laser accordable en longueur d'onde configurée pour émettre un rayonnement présentant une première longueur d'onde et pour faire varier temporellement ladite première longueur d'onde de manière à former ledit premier peigne de longueurs d'onde et dans lequel la deuxième source laser est une source accordable en longueur d'onde configurée pour émettre un rayonnement présentant une deuxième longueur d'onde et pour faire varier temporellement ladite deuxième longueur d'onde de manière à former ledit deuxième peigne de longueurs d'onde ;

- chaque source laser est une source laser impulsionnelle à blocage de modes, lesdits peignes de longueurs d'onde étant émis simultanément.

Un autre objet de l'invention est un procédé d'utilisation d'un système lidar comprenant les étapes suivantes :

- l'émission d'un premier faisceau laser comportant un premier peigne de longueurs d'onde distinctes $\lambda_i$, $i \in [1;m]$ et d'un deuxième faisceau laser comportant un deuxième peigne de longueurs d'onde distinctes $\lambda_j$, $i \in [n;p]$, différentes de celles du premier faisceau ;
- la diffraction par un premier composant optique du premier faisceau laser vers une scène à observer suivant une direction différente $\theta_{i \in [1;n]}$ pour chaque longueur d'onde $\lambda_i$ du premier peigne, lesdites directions étant situées dans un même plan dit azimutal ;
- la diffraction par un deuxième composant optique du deuxième faisceau laser vers la scène à observer suivant une direction différente $\phi_{i \in [n;p]}$ pour chaque longueur d'onde $\lambda_j$ du deuxième peigne, lesdites directions étant situées dans un même plan dit d'élévation ;
- la détection d'une portion du premier faisceau réfléchie par la scène à observer, dite première portion réfléchie, et une portion du deuxième faisceau réfléchie par la scène à observer, dite deuxième portion réfléchie,
- la génération d'un signal comprenant les battements de chaque longueur d'onde $\lambda_i$ de la première portion réfléchie avec chaque longueur d'onde $\lambda_j$ de la deuxième portion réfléchie
- la détermination de la position et/ou la vitesse radiale d'objets présents dans la scène à observer, à partir, au moins, de la ou des fréquences de battements comprises dans ledit signal.

**Brève description des figures :**

D'autres caractéristiques, détails et avantages de l'invention ressortiront à la lecture de la description faite en référence aux dessins annexés donnés à titre d'exemple et qui représentent, respectivement :

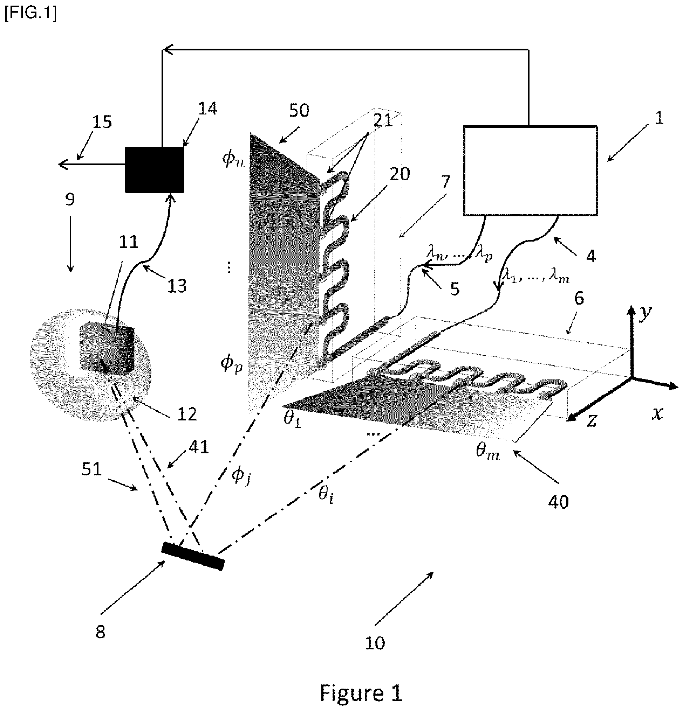

[FIG.1] une vue schématique du système lidar de l'invention.

[FIG.2A]

[FIG.2B], respectivement une vue de dessus et de côté du fonctionnement des composants optiques diffractifs du système de l'invention.

[FIG.3] une représentation de deux peignes de longueur d'onde générés par l'ensemble laser du système lidar de l'invention.

[FIG.4] une vue schématique du système lidar selon un premier mode de réalisation de l'invention.

[FIG.5] une vue schématique du système lidar selon un deuxième mode de réalisation de l'invention.

Les références aux figures, quand elles sont identiques, correspondent aux mêmes éléments.
Dans les figures, sauf contre-indication, les éléments ne sont pas à l'échelle et les axes (x,y,z) forment un repère orthonormé direct.

**Description détaillée :**

La figure 1 illustre un lidar selon l'invention. Le système lidar 10 est un système lidar cohérent et comprend un ensemble laser 1, comprenant au moins une source laser, configuré pour émettre un premier faisceau 4 comportant un premier peigne de longueurs d'ondes distinctes $\lambda_i$, $i \in [1;m]$ et un deuxième faisceau 5 comportant un deuxième peigne de longueurs d'onde distinctes $\lambda_j$, $j \in [n;p]$, différentes de celles du premier peigne. Par peigne de m fréquences on entend ici un spectre ayant une représentation fréquentielle consistant en une succession discrète d'une pluralité m de fréquences, régulièrement espacée par d'une fréquence appelée intervalle spectral libre $\Delta f$. Un peigne de longueur d'onde est la représentation dans le domaine spatial d'un peigne de fréquences. L'intervalle spectral libre du premier et du deuxième peigne est appelée $\Delta f_1$ et $\Delta f_2$ respectivement. La largeur spectrale totale du premier et du deuxième peigne est appelée $LS_1$ et $LS_2$ respectivement.
Selon un mode de réalisation de l'invention l'ensemble laser est configuré pour fonctionner en régime impulsionnel.
Alternativement, selon un autre mode de réalisation, la ou les sources lasers de l'ensemble laser sont des sources lasers à onde continue avec une relation de phase fixe entre les longueurs d'onde émises, l'ensemble laser comprenant en outre des moyens adaptés pour effectuer une modulation en fréquence des longueurs d'ondes émises. Pour réaliser cette modulation, plusieurs composants peuvent être utilisés : il peut s'agir d'un modulateur acousto-optique ou bien un double modulateur Mach Zehnder tel que ceux utilisés pour les transmissions optiques cohérentes (aussi appelé modulateur IQ) et qui est polarisé de manière à appliquer un décalage de la fréquence optique. Cette modulation en fréquence permet de déterminer, à l'issu d'une étape finale, la position d'au moins un objet réfléchissant présent dans la scène à observer.

Le premier faisceau 4 et le deuxième faisceau 5 sont tous les deux guidés vers un composant optique diffractif respectif, un premier composant optique diffractif 6 et un deuxième composant optique diffractif 7. Selon un exemple illustré dans la figure 1, les deux faisceaux sont guidés à l'aide de deux fibres optiques, mais la propagation dans l'espace libre est aussi possible.

Le premier composant optique diffractif est configuré pour diriger le premier faisceau vers la scène à observer suivant une direction différente $\theta_i \in [1;m]$ pour chaque longueur d'onde $\lambda_i$ du premier peigne, lesdites directions étant situées dans un même plan xz dit azimutal. Le deuxième composant optique diffractif est configuré pour diriger le deuxième faisceau vers la scène à observer suivant une direction différente $\phi_j \in [m;p]$ pour chaque longueur d'onde $\lambda_j$ du deuxième peigne, lesdites directions étant situées dans un même plan *yz* dit d'élévation non parallèle au plan xz azimutal. De manière préférentielle l'angle formé entre les deux plans est compris entre 10° et 90°, préférentiellement 30° et 90°, préférentiellement 60° et 90°. De manière préférentielle, l'angle entre les deux plans est égal à 90°. Par la suite on utilisera les termes « azimut » et « direction $\theta_i$ » de manière équivalente et « élévation » et « direction $\phi_j$ » de manière équivalente.

Selon un mode de réalisation préféré chacun des composants optiques diffractifs est un circuit optique intégré comprenant des guides d'onde 20 débouchant sur des faces de sortie du circuit optique intégré et des lentilles divergentes 21 aux faces de sorties. Les sorties sont alignées et espacées régulièrement selon l'axe x et chaque sortie possède un retard optique de constant par rapport à la sortie précédente. Pour chaque composant optique diffractif, en imposant un déphasage approprié entre les différentes sorties par le biais du retard optique entre lesdites sorties, les interférences entre les faisceaux provenant des sorties sont constructives uniquement dans une direction donnée, comme un réseau de diffraction. Dans un exemple donné à titre non limitatif, en considérant des guides optique d'indice 1.9, un écartement entre les sorties optiques du composant optique diffractif de 15 $\mu$m et un peigne de 11 longueurs d'ondes espacées de 1GHz autour d'une longueur d'onde centrale de 1.55$\mu$m, un retard optiques de 22 cm entre chaque sortie consécutive du dispositif passif permet de couvrir un angle de déflexion supérieur à 90°. Ces composants diffractifs permettent un alignement facile et robuste aux chocs et vibrations.

Dans un autre mode de réalisation, le composant optique diffractif est un réseau de diffraction en réflexion ou transmission d'amplitude ou de phase.

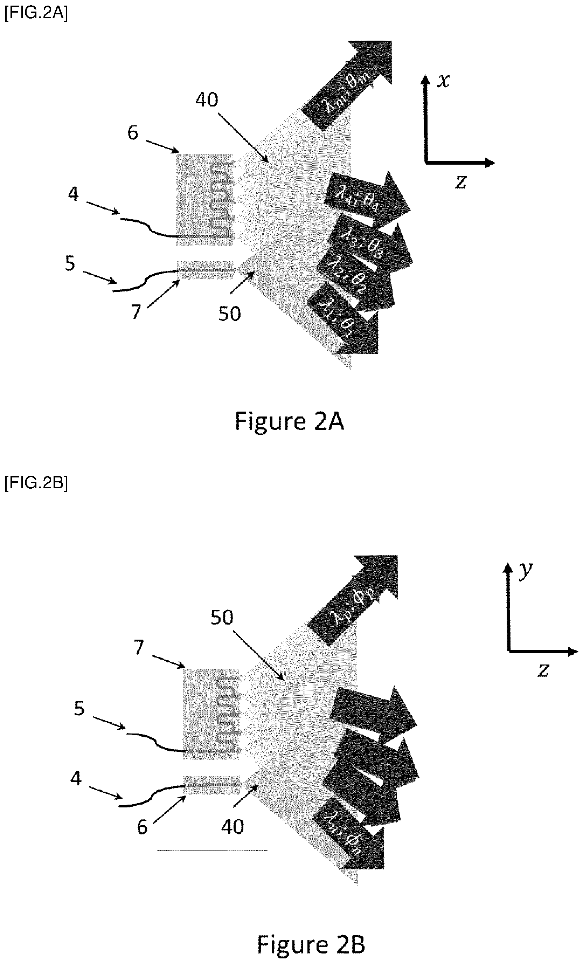

Les figure 2A et 2B illustre respectivement une vue de dessus et de côté du fonctionnement des composants optiques diffractifs du système lidar de l'invention.

En sortie des composants optiques diffractifs chaque longueur d'onde $\lambda_i$ (respectivement $\lambda_j$) émise par le système laser est rayonnée dans une direction $\theta_i$ (respectivement $\phi_j$) différente du plan xz (respectivement *yz)* de manière à couvrir dans chaque plan azimutal et d'élévation un angle d'environ 90°, préférentiellement environ 180°.

Le rayonnement laser obtenu après diffraction du premier faisceau par le premier composant optique diffractif, appelé premier rayonnement laser diffracté 40, permet donc d'échantillonner l'espace de la scène observée selon le plan azimutal xz grâce à la séparation spatiale des longueurs d'onde. De même le rayonnement laser obtenu après diffraction du deuxième faisceau par le deuxième composant optique diffractif, appelé deuxième rayonnement laser diffracté 50, permet d'échantillonner l'espace de la scène observée selon le plan d'élévation *yz* grâce à la séparation spatiale des longueurs d'onde.

Le système LIDAR comprend de plus un système de détection optique 9 comprenant au moins un photodétecteur 11 agencée de manière à détecter une portion du premier rayonnement diffracté 40 réfléchie par un objet de la scène à observer 8, dite première portion réfléchie 41, et une portion du deuxième rayonnement diffracté 50 réfléchie par un objet de la scène à observer 8, dite deuxième portion réfléchie 51. Typiquement, le photodétecteur est une photodiode à avalanche présentant un seuil de détection avantageusement bas.

Ainsi le photodétecteur 11 génère un signal 13 comprenant les battements de chaque longueur d'onde $\lambda_i$ de la première portion réfléchie avec chaque longueur d'onde $\lambda_j$ de la deuxième portion réfléchie.

Dans l'invention, le système lidar comprend en outre une unité de traitement 14 du signal généré par la photodiode 11, configurée pour déterminer la position et/ou la vitesse radiale d'objets présents dans la scène à observer, à partir, au moins, d'une ou de fréquences de battements comprises dans le signal généré par la photodiode.

Pour cela l'unité de traitement est configurée pour :

- calculer le spectre du signal généré par la photodiode 13 ;
- déterminer la position et/ou la vitesse radiale d'objets présents dans la scène à observer, à partir, au moins, d'une ou de fréquences de battements contenues dans ledit spectre; et
- générer un signal de sortie 15 représentatif de la position et/ou la vitesse radiale d'objets présents dans la scène à observer.

Chaque battement du signal à la fréquence $f_i-f_j$ avec $f_i=c/\lambda_i$ et $f_j=c/\lambda_j$, c étant la célérité de la lumière, signifie la présence d'un objet à une direction $\theta_i$ du plan *xz* et une direction $\phi_j$ du plan *yz* de la scène à observer réfléchissant une portion du premier et du deuxième rayonnement diffracté vers le photodétecteur.

En effet, supposons qu'un objet de la scène à observer soit situé dans une direction $\phi_j$ du plan d'élévation et une direction $\theta_i$ du plan azimutal par rapport aux composants diffractifs, de telle sorte qu'il réfléchisse vers le système de détection optique une portion du premier et du deuxième rayonnement diffracté comprenant donc respectivement la longueur d'onde $\lambda_j$ et la longueur d'onde $\lambda_i$. Le photodétecteur est configuré pour générer un signal comprenant le battement de la longueur d'onde $\lambda_j$ avec la longueur d'onde $\lambda_i$. A partir de ce signal, l'unité de traitement est configurée pour calculer le spectre du rayonnement détecté par le photodétecteur. Le spectre électrique comportera alors une composante à la fréquence $f_i-f_j$ avec $f_i=c/\lambda_i$ et $f_j=c/\lambda_j$. Pour une unique combinaison de longueurs d'onde du premier et deuxième peigne ($\lambda_i,\lambda_j$) donnant une certaine fréquence de battement $f_i-f_j$, il est donc possible de déterminer les directions $\theta_i$ et $\phi_j$ de l'objet associées à cette combinaison de longueur d'onde. La distance de l'objet est déterminée par le temps de vol de l'onde laser. Pour cela, le déclenchement des impulsions laser (ou de la modulation fréquentielle dans le cas où la ou les sources lasers de l'ensemble laser sont des sources lasers à onde continue modulées en fréquence) est synchronisé avec l'unité de traitement. Aussi l'unité de traitement est reliée à l'ensemble laser.

Grâce aux directions $\theta_i$ et $\phi_j$ de l'objet (ou azimut et élévation) et sa distance, l'unité de traitement est configurée pour déterminer la position de l'objet.

La vitesse radiale de cet objet est déterminée par l'unité de traitement 14 par le décalage en fréquence lié à l'effet Doppler d'une fréquence de battement par rapport à la fréquence $f_i-f_j$.

En analysant toutes les composantes fréquentielles $f_i-f_j$ du spectre du signal généré par le photodétecteur il est possible de reconstituer la scène observée avec un traitement simple, direct et non ambigu. La reconstruction de la scène est rapide, car elle ne nécessite aucun balayage mécanique d'une quelconque pièce du dispositif. De plus, le système LIDAR 10 ne présente aucune pièce mobile ce qui rend les mesures de vitesses radiales et de position robustes aux vibrations et aux fortes accélérations.

Dans tous les modes de réalisation de l'invention, le système lidar ne comprend pas d'oscillateur local avec lequel peuvent battrent les deux portions réfléchies. Les battements sont obtenus par l'interférence des deux portions réfléchies entre elles. Afin d'éviter une probabilité de détection trop faible, il est donc nécessaire que l'ensemble laser soit configuré pour que le premier faisceau et le deuxième faisceau soient émis avec une puissance supérieure à 1W, préférentiellement, 3W. Dans un autre mode de réalisation, l'ensemble laser est configuré pour que le premier et le deuxième faisceau soient émis avec une puissance permettant d'éviter tout risque oculaire ou dermatologique en utilisation. Pour cela, la somme des puissances laser du premier et du deuxième faisceau est inférieure à 250mW à 1550nm en considérant une distance nominale de danger oculaire de 10cm et un angle de faisceau de 90° en sortie de chaque composant optique diffractif.

Lorsque les deux peignes de longueurs d'onde sont choisis de manière à ce qu'il n'y ait pas d'ambiguïté de détection entre les différentes combinaisons de fréquences de battement, il est donc possible de déterminer la direction $\phi_j$ selon le plan d'élévation et le plan azimutal $\theta_i$ de l'objet de la scène à observer à partir de la fréquence de battement $f_i-f_j$. Par ambiguïté de détection, on entend ici que le battement d'une première longueur d'onde $\lambda_{i1}$ du premier peigne avec une première longueur d'onde du deuxième peigne $\lambda_{j1}$ serait à la même fréquence que le battement d'une deuxième longueur d'onde $\lambda_{i2}$ du premier peigne avec une deuxième longueur d'onde $\lambda_{j2}$ du deuxième peigne. Aussi l'ensemble laser est configuré pour qu'il n'existe pas deux couples de longueurs d'onde distinctes ($\lambda_{i1}$, $\lambda_{j1}$) et ($\lambda_{i2}$, $\lambda_{j2}$) tels que la fréquence du battement de ces deux couples de longueur d'onde soit identique. C'est-à-dire que laser est configuré pour qu'il n'existe pas deux couples de longueurs d'onde ($\lambda_{i1}$, $\lambda_{j1}$) et ($\lambda_{i2}$, $\lambda_{j2}$) tels que:

$$[\text{Math 1}] \quad \frac{c}{\lambda_{i1}} - \frac{c}{\lambda_{j1}} = \frac{c}{\lambda_{i2}} - \frac{c}{\lambda_{j2}}.$$

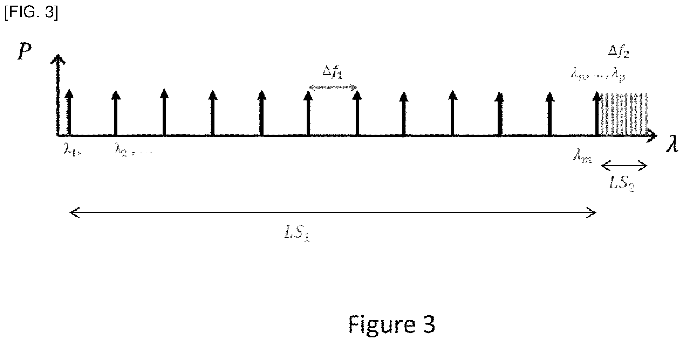

Pour éviter ces ambiguïtés, selon un mode de réalisation préféré l'ensemble laser est également configuré pour que la largeur spectrale du deuxième peigne de longueurs d'onde ($LS_2$) soit inférieure à l'intervalle spectral libre du premier peigne de longueur d'onde $\Delta f_1$. Cette solution est la plus simple expérimentalement à obtenir. Cette solution est illustrée dans la figure 3 présentant la puissance P des longueurs d'ondes $\lambda$ des deux peignes.

Dans l'exemple de la figure 3, selon un mode de réalisation, l'ensemble laser est en outre configuré pour que la plus grande longueur d'onde du premier peigne de longueur d'onde soit inférieure à la plus petite longueur d'onde du deuxième peigne de longueur d'onde.

Alternativement, dans un autre mode de réalisation, l'ensemble laser est configuré pour que la plus petite longueur d'onde du premier peigne de longueur d'onde soit supérieure à la plus grande longueur d'onde du deuxième peigne de longueur d'onde.

Le nombre de longueurs d'onde de chaque peigne fixe la résolution angulaire du dispositif lidar 10.

La résolution en vitesse radiale est fixée par l'espacement minimal en fréquence entre deux composantes fréquentielles du spectre, c'est-à-dire par le plus petit intervalle spectral libre entre celui du premier peigne $\Delta f_1$, et celui du deuxième peigne $\Delta f_2$. Dans le mode de réalisation de la figure 3, la résolution en vitesse est donc fixée par l'intervalle spectral libre du deuxième peigne $\Delta f_2$. Aussi, le décalage maximal par effet Doppler mesurable en fréquence $\Delta f_{max}$ est :

$$[Math\ 2]\ \Delta f_{max} = \frac{\Delta f_2}{2}$$

Afin ne pas être un facteur limitant de la mesure de position ou de vitesse radiale d'objets, la bande spectrale de détection du photodétecteur est supérieure ou égale à $LS_1+LS_2+\Delta f_2$. Ainsi le photodétecteur peut détecter le battement de chaque longueur d'onde du premier peigne avec chaque longueur d'onde du deuxième peigne, avec une résolution en vitesse identique pour chaque fréquence de battement.

Dans une application lidar où la vitesse des objets de la scène à observer est moins importante, diminuant ainsi le décalage maximal en fréquence par effet Doppler, il est possible de diminuer l'intervalle spectrale libre du deuxième peigne $\Delta f_2$ et ainsi bénéficier d'une meilleure résolution angulaire en augmentant le nombre de longueur d'onde du deuxième peigne ou d'une analyse spectrale sur une bande réduite en sortie du photodétecteur.

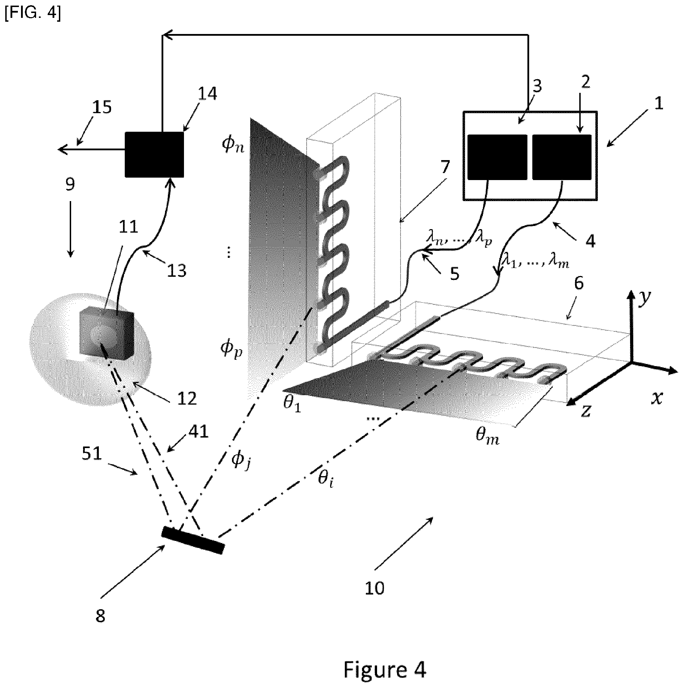

La figure 4 présente une première variante de l'invention dans lequel l'ensemble laser 1 comprend deux sources lasers, une première source laser 2 émettant ledit premier faisceau 4 et une deuxième source laser émettant ledit deuxième faisceau 5. Cette première variante permet deux possibilitées : toutes les longueurs d'onde de chaque peigne de longueurs d'onde sont émises de manière simultanée (premier mode de réalisation) ou toutes les longueurs d'onde de chaque peigne sont émises successivement une par une au cours du temps (deuxième mode de réalisation). Par successivement, on entend qu'à l'instant t l'ensemble laser émet un premier faisceau comportant une seule longueur d'onde $\lambda_i$ du premier peigne et un deuxième faisceau à une seule longueur d'onde $\lambda_j$ du deuxième peigne puis à l'instant t', l'ensemble laser émet un premier faisceau comportant une seule longueur d'onde $\lambda_{i+1}$ du premier peigne et un deuxième faisceau à une seule longueur d'onde $\lambda_{j+1}$ du deuxième peigne.

Dans le premier mode de réalisation de la première variante chaque source laser de l'ensemble laser est une source laser impulsionnelle à blocage de modes. Ainsi, la première source laser est configurée pour émettre simultanément toutes les longueurs d'onde du premier peigne $\lambda_i$, j$\in$[1;m] et la deuxième source est configurée pour émettre simultanément toutes les longueurs d'ondes du deuxième peigne $\lambda_j$, j$\in$[n;p]. Dans ce mode de réalisation, il est nécessaire que les lasers à verrouillage de mode soient stables et ne nécessitent pas un asservissement afin de garantir leur stabilité. Alternativement, il est possible de prélever un mode d'une des deux sources laser dit laser maître pour l'injecter dans l'autre laser dit laser esclave afin de réaliser un asservissement du laser esclave à partir du laser maître. Cela permet de garantir une grande stabilité du peigne émis pas le laser esclave par rapport au peigne émis par le laser maître.

A titre d'exemple donné de manière non limitatif, le premier peigne de longueur d'onde comporte douze longueurs d'onde distinctes $\lambda_i$ i$\in$[1;12] toutes espacées de $\Delta f_1$=1GHz avec la première longueur d'onde du premier peigne $\lambda_1$ comprise entre 1$\mu$m et 2$\mu$m. Le deuxième peigne comporte dix longueurs d'onde distinctes $\lambda_j$ iE[13;22] toute espacées de $\Delta f_2$=100MHz avec la première longueur d'onde du deuxième peigne $\lambda_{13}$ supérieure à dernière longueur d'onde du premier peigne $\lambda_{12}$. Ainsi, dans cet exemple précis, la partie entière de la fréquence de battement détectée par le photodetecteur et déterminé à l'aide de l'unité de traitement 14 donne l'azimut de l'objet réfléchissant et la partie décimale donne son élévation. Ceci permet de simplifier les étapes de détermination de la vitesse radiale et/ou de la position d'objets, réalisées par l'unité de traitement 14.

Dans cet exemple, chacun des composants optiques diffractifs est un circuit optique intégré comprenant des guides d'onde 20 avec un indice effectif de 1.9 débouchant sur des faces de sortie du circuit optique intégré et des lentilles divergentes 21 aux faces de sorties. Les sorties sont alignées et espacées de 15$\mu$m selon l'axe x pour le premier composant optique diffractif et de 15$\mu$m selon l'axe y pour le deuxième composant optique diffractif et chaque sortie possède un retard optique de 22cm par rapport à la sortie précédente pour le premier composant optique diffractif et de 220cm pour le deuxième composant optique diffractif. Chaque composant diffractif permet de couvrir un angle d'environ 90° avec les différentes directions $\theta_j$ et $\phi_i$.

Dans ce premier mode de réalisation, en mesurant toutes les composantes fréquentielles $f_i$-$f_j$ (avec $f_i$=c/$\lambda_i$ et $f_j$=c/$\lambda_j$) du spectre du signal généré par le photodétecteur il est possible de reconstituer complétement la scène observée instantanément en une seule mesure. A l'inverse des systèmes LIDAR utilisant des dispositifs interférentiels connus de l'art antérieur, le mode de réalisation de la figure 1 permet donc d'observer simultanément plusieurs directions d'une scène et donc de s'affranchir des contraintes et désavantages liés au balayage en longueur d'onde du faisceau laser nécessaire dans certain lidar utilisant des système interférométrique (lenteur, répétabilité...).

Dans un deuxième mode de réalisation de la première variante, l'ensemble laser comprend lui aussi une première 2 et une deuxième source laser 3. Dans ce mode de réalisation, la première source laser 2 est une source laser accordable en longueur d'onde configurée pour émettre un premier faisceau présentant une première longueur d'onde et pour faire varier temporellement ladite première longueur d'onde de manière à former ledit premier peigne de longueurs d'onde. La deuxième source laser 3 est elle aussi une source accordable en longueur d'onde configurée pour émettre un deuxième présentant une deuxième longueur d'onde et pour faire varier temporellement ladite deuxième longueur d'onde de manière à former ledit deuxième peigne de longueurs d'onde. Dans ce mode de réalisation où les longueurs d'ondes de chaque peigne sont obtenues successivement une par une au cours du temps par un balayage en longueur d'onde, la scène est reconstruite à l'issu du balayage en longueur d'onde. Ce deuxième mode de réalisation de la première variante permet de, soit réduire la puissance totale en sortie de chaque laser comparativement au premier mode de réalisation (typiquement d'un facteur 10), soit augmenter la portée du lidar pour une puissance identique en sortie de chaque laser comparativement au premier mode de réalisation (typiquement d'un facteur 3). Enfin, ce deuxième mode de réalisation permet de raffiner le balayage d'une zone particulière de l'espace en réalisant un accord continu plus lent des longueurs d'ondes d'une plage particulière du spectre de chaque laser accordable qui sont rayonnées dans des directions correspondant à la zone de l'espace à analyser plus finement.

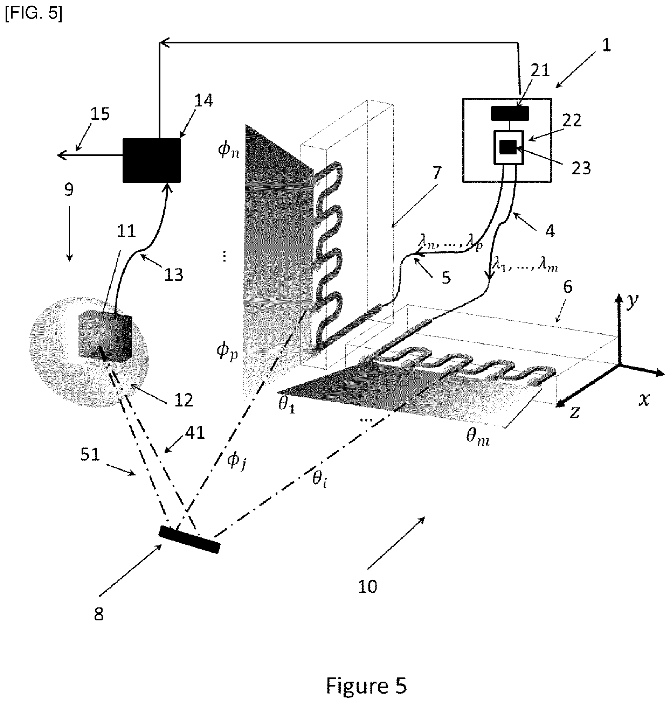

La figure 5 illustre une deuxième variante de l'invention. Dans celle-ci l'ensemble laser est un oscillateur paramétrique optique (OPO) comprenant une unique source laser 21 illuminant un cristal biréfringent 22 disposé dans une cavité optique 23. La source laser 21 pompe le cristal biréfringent et permet d'obtenir en sortie du cristal et de la cavité un premier faisceau « signal » présentant une première longueur d'onde (longueur d'onde « signal » de l'OPO) et un deuxième faisceau « complémentaire » ou « idler » à une deuxième longueur d'onde distinctes de la première longueur d'onde (longueur d'onde « complémentaire » ou « idler » de l'OPO). En réalisant un accord de phase par biréfringence de type II, l'ensemble laser est configuré pour les longueurs d'onde signal et complémentaire puissent être changées continûment par une simple rotation du cristal non-linéaire. Ici un accord de phase de type II signifie que le faisceau signal et complémentaire ont leur polarisations croisées en sortie de cristal. En changeant l'angle entre le faisceau de pompe issu de la source laser 21 et le cristal, la condition d'accord de phase sera vérifiée pour des longueurs d'onde signal et complémentaire différentes. Ainsi, à l'aide d'une rotation du cristal, l'ensemble laser est configuré pour faire varier temporellement lesdites première et deuxième longueurs d'onde de manière à former respectivement ledit premier et deuxième peigne de longueurs d'onde.

Dans cette variante, la scène est reconstruite à l'issu du balayage en longueur d'onde. Les avantages sont les mêmes que pour le deuxième mode de réalisation de la première variante.

Selon un mode de réalisation, le système de détection optique comprend en outre un système optique de collection 12 permettant de focaliser les rayons lumineux issus du premier et du deuxième faisceau réfléchis par la scène à observer sur la photodiode. Ce système optique peut être une lentille convergente ou un ensemble de lentilles formant un objectif à grande ouverture numérique.

## Revendications

1. Système lidar (10) comprenant un ensemble laser (1) comprenant au moins une source laser (2, 3, 21), et un système de détection optique (9) pour détecter un rayonnement émis par l'ensemble laser et réfléchi par une scène à observer (8), ledit système étant configuré de telle sorte que :

    - l'ensemble laser (1) est configuré pour émettre un premier faisceau (4) comportant un premier peigne de longueurs d'onde distinctes $\lambda_i$, $i \in [1;m]$ et un deuxième faisceau (5) comportant un deuxième peigne de longueurs d'onde distinctes $\lambda_j$, $j \in [n;p]$, différentes de celles du premier peigne (4);

    - le système lidar (10) comprend également un premier composant optique diffractif (6) configuré pour diriger le premier faisceau (4) vers la scène à observer suivant une pluralité de directions différentes $\theta_i \in [1;n]$ pour chaque longueur d'onde $\lambda_i$ du premier peigne, lesdites directions étant situées dans un même plan *xz* dit azimutal, le rayonnement laser obtenu après diffraction du premier faisceau par le premier composant optique diffractif étant appelé premier rayonnement diffracté (40) ;

    - ledit système lidar comprend en outre un deuxième composant optique diffractif (7) configuré pour diriger le deuxième faisceau (5) vers la scène à observer suivant une pluralité de directions différentes $\phi_j \in [n;p]$ pour chaque longueur d'onde $\lambda_j$ du deuxième peigne, lesdites directions étant situées dans un même plan *yz* dit d'élévation non parallèle au plan *xz* azimutal, le rayonnement laser obtenu après diffraction du deuxième faisceau par le deuxième composant optique diffractif étant appelé deuxième rayonnement laser diffracté (50) ;

    - le système de détection optique (9) comprend au moins une photodiode (11) agencée de manière à détecter une portion du premier rayonnement diffracté (40) réfléchie par la scène à observer (8), dite première portion réfléchie (41), et une portion du deuxième rayonnement diffracté (50) réfléchie par la scène à observer (8), dite deuxième portion réfléchie (51), la photodiode étant configurée pour générer un signal (13) comprenant les battements de chaque longueur d'onde $\lambda_i$ de la première portion réfléchie avec chaque longueur d'onde $\lambda_j$ de la deuxième

portion réfléchie ; et

- le système lidar comprend en outre une unité de traitement (14) du signal généré par la photodiode, configurée pour déterminer la position et/ou la vitesse radiale d'objets présents dans la scène à observer, à partir, au moins, d'une ou de fréquences desdits battements comprises dans ledit signal.

2. Système lidar selon la revendication précédente, dans lequel la ou les sources lasers de l'ensemble laser sont des sources lasers à onde continue avec une relation de phase fixe entre les longueurs d'onde émises, l'ensemble laser comprenant en outre des moyens adaptés pour effectuer une modulation en fréquence des longueurs d'ondes émises.

3. Système lidar selon la revendication 1, dans lequel la ou les sources lasers de l'ensemble laser sont des sources lasers impulsionnelles.

4. Système lidar selon l'une quelconque des revendications précédentes, dans lequel l'ensemble laser est configuré pour qu'il n'existe pas deux couples de longueurs d'onde $(\lambda_{i1}, \lambda_{j1})$ et $(\lambda_{i2}, \lambda_{j2})$ tels que la fréquence du battement de ces deux couples de longueur d'onde soit identique, avec $\lambda_{i1}$ et $\lambda_{i2}$ des longueurs d'onde distinctes du premier peigne et $\lambda_{j1}$ et $\lambda_{j2}$ des longueurs d'onde distinctes du deuxième peigne.

5. Système lidar selon l'une quelconque des revendications précédentes, dans laquelle l'ensemble laser est configuré pour que la largeur spectrale du deuxième peigne de longueurs d'onde $(LS_2)$ soit inférieure à l'intervalle spectral libre du premier peigne de longueur d'onde $(\Delta f_1)$.

6. Système lidar selon l'une quelconque des revendications précédentes, dans lequel l'ensemble laser est configuré pour que la plus grande longueur d'onde du premier peigne de longueur d'onde soit inférieure à la plus petite longueur d'onde du deuxième peigne de longueur d'onde ou que la plus petite longueur d'onde du premier peigne de longueur d'onde soit supérieure à la plus grande longueur d'onde du deuxième peigne de longueur d'onde.

7. Système lidar selon l'une quelconque des revendications précédentes, dans lequel le système de détection optique comprend en outre un système optique de collection (12) permettant de focaliser sur la photodiode les rayons lumineux issus de la première et de la deuxième portion réfléchie.

8. Système lidar selon l'une quelconque des revendications précédentes, dans lequel chaque composant optique diffractif est un circuit optique intégré comprenant des guides d'onde (20) débouchant sur des faces de sortie du circuit optique intégré et des lentilles divergentes (21) aux faces de sortie.

9. Système lidar selon l'une quelconque des revendications précédentes, dans lequel la ou les sources laser émettent chacune une puissance totale laser supérieure à 1W.

10. Système lidar selon l'une quelconque des revendications précédentes, dans lequel l'ensemble laser est un oscillateur paramétrique optique comprenant une unique source laser (21) pompant un cristal biréfringent (23) disposé dans une cavité optique (22) et configuré pour émettre un rayonnement présentant une première longueur d'onde et une deuxième longueur d'onde distinctes de la première longueur d'onde; l'ensemble laser étant de plus configuré pour faire varier temporellement lesdites première et deuxième longueurs d'onde de manière à former respectivement ledit premier et deuxième peigne de longueurs d'onde.

11. Système lidar selon l'une quelconque des revendications 1 à 9, dans lequel l'ensemble laser comprend deux sources lasers, une première source laser émettant ledit premier faisceau et une deuxième source laser émettant ledit deuxième faisceau.

12. Système lidar selon la revendication précédente, dans lequel la première source laser est une source laser accordable en longueur d'onde (31) configurée pour émettre un rayonnement présentant une première longueur d'onde et pour faire varier temporellement ladite première longueur d'onde de manière à former ledit premier peigne de longueurs d'onde et dans lequel la deuxième source laser est une source accordable en longueur d'onde (32) configurée pour émettre un rayonnement présentant une deuxième longueur d'onde et pour faire varier temporellement ladite deuxième longueur d'onde de manière à former ledit deuxième peigne de longueurs d'onde.

13. Système lidar selon les revendications 3 et 10, dans lequel chaque source laser est une source laser impulsionnelle à blocage de modes, lesdits peignes de longueurs d'onde étant émis simultanément.

14. Procédé d'utilisation d'un système lidar comprenant les étapes suivantes :

   a. l'émission d'un premier faisceau laser comportant un premier peigne de longueurs d'onde distinctes $\lambda_i$, $i \in [1;m]$ et d'un deuxième faisceau laser comportant un deuxième peigne de longueurs d'onde distinctes $\lambda_j$, $i \in [n;p]$, différentes de celles du premier faisceau ;

b. la diffraction par un premier composant optique du premier faisceau laser vers une scène à observer suivant une direction différente $\theta_i \in [1;n]$ pour chaque longueur d'onde $\lambda_i$ du premier peigne, lesdites directions étant situées dans un même plan dit azimutal ;

c. la diffraction par un deuxième composant optique du deuxième faisceau laser vers la scène à observer suivant une direction différente $\phi_i \in [n;p]$ pour chaque longueur d'onde $\lambda_j$ du deuxième peigne, lesdites directions étant situées dans un même plan dit d'élévation ;

d. la détection d'une portion du premier faisceau réfléchie par la scène à observer, dite première portion réfléchie, et une portion du deuxième faisceau réfléchie par la scène à observer, dite deuxième portion réfléchie,

e. la génération d'un signal comprenant les battements de chaque longueur d'onde $\lambda_i$ de la première portion réfléchie avec chaque longueur d'onde $\lambda_j$ de la deuxième portion réfléchie

f. la détermination de la position et/ou la vitesse radiale d'objets présents dans la scène à observer, à partir, au moins, de la ou des fréquences de battements comprises dans ledit signal.

**Patentansprüche**

1. Lidar-System (10), umfassend einen Laseraufbau (1), umfassend mindestens eine Laserquelle (2, 3, 21) und ein optisches Erkennungssystem (9) zum Erkennen einer Strahlung, die von dem Laseraufbau ausgesendet und von einer zu betrachtenden Szene (8) reflektiert wird, wobei das System so konfiguriert ist, dass

- der Laseraufbau (1) dafür konfiguriert ist, einen ersten Strahl (4), der einen ersten Kamm von verschiedenen Wellenlängen $\lambda_i$, $i \in [1;m]$ aufweist, und einen zweiten Strahl (5), der einen zweiten Kamm von verschiedenen Wellenlängen $\lambda_j$, jE[n;p], die sich von denjenigen des ersten Kamms (4) unterscheiden, aufweist, auszusenden;

- das Lidar-System (10) auch eine erste optische Beugungskomponente (6) umfasst, die dafür konfiguriert ist, einer Vielzahl von verschiedenen Richtungen $\theta_i \in [1;n]$ für jede Wellenlänge $\lambda_i$ des ersten Kamms folgend den ersten Strahl (4) zu der zu betrachtenden Szene zu lenken, wobei sich die Richtungen in einer gleichen Ebene xz, die als azimutale Ebene bezeichnet wird, befinden, wobei die Laserstrahlung, die nach der Beugung des ersten Strahls durch die erste optische Beugungskomponente erhalten wird, als erste gebeugte Strahlung (40) bezeichnet wird;

- das Lidar-System ferner eine zweite optische Beugungskomponente (7) umfasst, die dafür konfiguriert ist, den zweiten Strahl (5) einer Vielzahl von verschiedenen Richtungen $\phi_j \in [n;p]$ für jede Wellenlänge $\lambda_j$ des zweiten Kamms folgend zu der zu betrachtenden Szene zu lenken, wobei sich die Richtungen in einer gleichen Ebene yz, die als Elevationsebene bezeichnet wird, die nicht zu der azimutalen Ebene xz parallel ist, befinden, wobei die Laserstrahlung, die nach der Beugung des zweiten Strahls durch die zweite optische Beugungskomponente erhalten wird, als zweite gebeugte Laserstrahlung (50) bezeichnet wird;

- das optische Erkennungssystem (9) mindestens eine Fotodiode (11) umfasst, die so eingerichtet ist, dass sie einen Teil der ersten gebeugten Strahlung (40), der von der zu betrachtenden Szene (8) reflektiert wird, der als erster reflektierter Teil (41) bezeichnet wird, und einen Teil der zweiten gebeugten Strahlung (50) erkennt, der von der zu betrachtenden Szene (8) reflektiert wird, der als zweiter reflektierter Teil (51) bezeichnet wird, erkennt, wobei die Fotodiode dafür konfiguriert ist, ein Signal (13) zu erzeugen, das die Schwingungen jeder Wellenlänge $\lambda_i$ des ersten reflektierten Teils mit jeder Wellenlänge $\lambda_j$ des zweiten reflektierten Teils umfasst; und

- das Lidar-System ferner eine Einheit (14) zum Verarbeiten des von der Fotodiode erzeugten Signals umfasst, die dafür konfiguriert ist, die Position und/oder die radiale Geschwindigkeit von sich in der zu betrachtenden Szene befindenden Objekten anhand von mindestens einer oder von mehreren Frequenzen der in dem Signal enthaltenen Schwingungen zu bestimmen.

2. Lidar-System nach dem vorhergehenden Anspruch, wobei die Laserquelle oder Laserquellen des Laseraufbaus Laserquellen mit kontinuierlicher Welle mit einer festen Phasenbeziehung zwischen den ausgesendeten Wellenlängen sind, wobei der Laseraufbau ferner Mittel umfasst, die geeignet sind, eine Frequenzmodulation der ausgesendeten Wellenlängen zu bewirken.

3. Lidar-System nach Anspruch 1, wobei die Laserquelle oder Laserquellen des Laseraufbaus Pulslaserquellen sind.

4. Lidar-System nach einem der vorhergehenden Ansprüche, wobei der Laseraufbau dafür konfiguriert ist, dass es keine zwei Wellenlängenpaare ($\lambda_{i1}$, $\lambda_{j1}$) und ($\lambda_{i2}$, $\lambda_{j2}$) gibt, so dass die Schwingungsfrequenz dieser beiden Wellenlängenpaare identisch ist, wobei $\lambda_{i1}$ und $\lambda_{i2}$ verschiedene Wellenlängen des ersten Kamms sind und $\lambda_{j1}$ und $\lambda_{j2}$ verschiedene Wel-

lenlängen des zweiten Kamms sind.

5. Lidar-System nach einem der vorhergehenden Ansprüche, wobei der Laseraufbau dafür konfiguriert ist, dass die Spektralbreite des zweiten Wellenlängenkamms von $(LS_2)$ kleiner ist als der freie Spektralbereich des ersten Wellenlängenkamms $(\Delta f_1)$.

6. Lidar-System nach einem der vorhergehenden Ansprüche, wobei der Laseraufbau dafür konfiguriert ist, dass die größte Wellenlänge des ersten Wellenlängenkamms kleiner als die kleinste Wellenlänge des zweiten Wellenlängenkamms ist, oder dass die kleinste Wellenlänge des ersten Wellenlängenkamms größer als die größte Wellenlänge des zweiten Wellenlängenkamms ist.

7. Lidar-System nach einem der vorhergehenden Ansprüche, wobei das optische Erkennungssystem ferner ein optisches Erfassungssystem (12) umfasst, das es ermöglicht, auf der Fotodiode die Lichtstrahlen zu fokussieren, die aus dem ersten und dem zweiten reflektierten Teil stammen.

8. Lidar-System nach einem der vorhergehenden Ansprüche, wobei jede optische Beugungskomponente eine optische integrierte Schaltung ist, die Wellenleiter (20) umfasst, die zu Ausgangsseiten der optischen integrierten Schaltung und Streulinsen (21) an den Ausgangsseiten führen.

9. Lidar-System nach einem der vorhergehenden Ansprüche, wobei die Laserquelle oder Laserquellen jeweils eine gesamte Laserleistung größer als 1 W aussenden.

10. Lidar-System nach einem der vorhergehenden Ansprüche, wobei der Laseraufbau ein optischer parametrischer Oszillator ist, der eine einzige Laserquelle (21) umfasst, die einen doppelbrechenden Kristall (23) pumpt, der in einem optischen Hohlraum (22) angeordnet und dafür konfiguriert ist, eine Strahlung auszusenden, die eine erste Wellenlänge und eine zweite Wellenlänge aufweist, die von der ersten Wellenlänge verschieden ist; wobei der Laseraufbau außerdem dafür konfiguriert ist, die erste und die zweite Wellenlänge zeitlich so zu variieren, dass jeweils der erste und der zweite Wellenlängenkamm gebildet werden.

11. Lidar-System nach einem der Ansprüche 1 bis 9, wobei der Laseraufbau zwei Laserquellen umfasst, wobei eine erste Laserquelle den ersten Strahl aussendet und eine zweite Laserquelle den zweiten Strahl aussendet.

12. Lidar-System nach dem vorhergehenden Anspruch, wobei die erste Laserquelle eine Laserquelle mit abstimmbarer Wellenlänge (31) ist, die dafür konfiguriert ist, einen Strahl auszusenden, der eine erste Wellenlänge aufweist, und die erste Wellenlänge zeitlich so zu variieren, dass der erste Wellenlängenkamm gebildet wird, und wobei die zweite Laserquelle eine Laserquelle mit abstimmbarer Wellenlänge (32) ist, die dafür konfiguriert ist, einen Strahl auszusenden, der eine zweite Wellenlänge aufweist, und die zweite Wellenlänge zeitlich so zu variieren, dass der zweite Wellenlängenkamm gebildet wird.

13. Lidar-System nach den Ansprüchen 3 und 10, wobei jede Laserquelle eine Modenkopplungs-Pulslaserquelle ist, wobei die Wellenlängenkämme gleichzeitig ausgesendet werden.

14. Verwendungsverfahren eines Lidar-Systems, umfassend die folgenden Schritte:

a. Aussenden eines ersten Laserstrahls, der einen ersten Kamm von verschiedenen Wellenlängen $\lambda_i$, $i \in [1;m]$ aufweist, und eines zweiten Laserstrahls, der einen zweiten Kamm von verschiedenen Wellenlängen $\lambda_j$, $iE[n;p]$, die sich von denjenigen des ersten Strahls unterscheiden, aufweist;
b. Beugen, durch eine erste optische Komponente, des ersten Laserstrahls zu einer zu betrachtenden Szene, für jede Wellenlänge $\lambda_i$ des ersten Kamms einer anderen Richtung $\theta_i \in [1;n]$ folgend, wobei sich die Richtungen in einer gleichen Ebene, die als azimutale Ebene bezeichnet wird, befinden,
c. Beugen, durch eine zweite optische Komponente, des zweiten Laserstrahls zu der zu betrachtenden Szene, für jede Wellenlänge $\lambda_j$ des zweiten Kamms einer anderen Richtung $\phi_i \in [n;p]$ folgend, wobei sich die Richtungen in einer gleichen Ebene, die als Elevationsebene bezeichnet wird, befinden;
d. Erkennen eines Teils des ersten, von der zu betrachtenden Szene reflektierten Strahls, der als erster reflektierter Strahl bezeichnet wird, und eines Teils des zweiten, von der zu betrachtenden Szene reflektierten Strahls, der als zweiter reflektierter Teil bezeichnet wird,
e. Erzeugen eines Signals, das die Schwingungen jeder Wellenlänge $\lambda_i$ des ersten reflektierten Teils mit jeder Wellenlänge $\lambda_j$ des zweiten reflektierten Teils umfasst,
f. Bestimmen der Position und/oder der radialen Geschwindigkeit von sich in der zu betrachtenden Szene befindenden Objekten anhand von mindestens der Frequenz oder von Frequenzen von in dem Signal enthaltenen Schwingungen.

## Claims

1. A lidar system (10) comprising a laser assembly (1) comprising at least one laser source (2, 3, 21), and an optical detecting system (9) for detecting radiation emitted by the laser assembly and reflected by a scene to be observed (8), said system being configured such that:

      - the laser assembly (1) is configured to emit a first beam (4) having a first comb of separate wavelengths $\lambda_i$, $i \in [1;m]$ and a second beam (5) having a second comb of separate wavelengths $\lambda_j$, $j E[n;p]$ different from those of the first comb (4);
      - the lidar system (10) also comprises a first diffractive optical component (6) configured to direct the first beam (4) toward the scene to be observed in a plurality of different directions $\theta_i \in [1;n]$ for each wavelength $\lambda_i$ of the first comb, said directions being located in one and the same xz plane, called an azimuthal plane, the laser radiation obtained after diffraction of the first beam by the first diffractive optical component being called the first diffracted radiation (40);
      - said lidar system further comprises a second diffractive optical component (7) configured to direct the second beam (5) toward the scene to be observed in a plurality of different directions $\phi_j \in [n;p]$ for each wavelength $\lambda_j$ of the second comb, said directions being located in one and the same yz plane, called an elevation plane, which is not parallel to the azimuthal xz plane, the laser radiation obtained after diffraction of the second beam by the second diffractive optical component being called the second diffracted laser radiation (50);
      - the optical detecting system (9) comprises at least one photodiode (11) arranged so as to detect a portion of the first diffracted radiation (40) reflected by the scene to be observed (8), called the first reflected portion (41), and a portion of the second diffracted radiation (50) reflected by the scene to be observed (8), called the second reflected portion (51), the photodiode being configured to generate a signal (13) comprising the beats of each wavelength $\lambda_i$ of the first reflected portion with each wavelength $\lambda_j$ of the second reflected portion; and
      - the lidar system further comprises a processing unit (14) for processing the signal generated by the photodiode, which is configured to determine the position and/or the radial speed of objects present in the scene to be observed, on the basis, at least, of one or more frequencies of said beats comprised in said signal.

2. The lidar system according to the preceding claim, wherein the one or more laser sources of the laser assembly are continuous-wave laser sources with a set phase relationship between the emitted wavelengths, the laser assembly further comprising means suitable for achieving a frequency modulation of the emitted wavelengths.

3. The lidar system according to claim 1, wherein the one or more laser sources of the laser assembly are pulsed laser sources.

4. The lidar system according to any one of the preceding claims, wherein the laser assembly is configured so that there are no two pairs of wavelengths ($\lambda_{i1}$, $\lambda_{j1}$) and ($\lambda_{i2}$, $\lambda_{j2}$) such that the frequency of the beat of these two pairs of wavelengths is identical, with $\lambda_{i1}$ and $\lambda_{i2}$ being separate wavelengths of the first comb and $\lambda_{j1}$ and $\lambda_{j2}$ being separate wavelengths of the second comb.

5. The lidar system according to any one of the preceding claims, wherein the laser assembly is configured so that the spectral width of the second wavelength comb ($LS_2$) is narrower than the free spectral range of the first wavelength comb ($\Delta f_1$).

6. The lidar system according to any one of the preceding claims, wherein the laser assembly is configured so that the longest wavelength of the first wavelength comb is shorter than the shortest wavelength of the second wavelength comb or so that the shortest wavelength of the first wavelength comb is longer than the longest wavelength of the second wavelength comb.

7. The lidar system according to any one of the preceding claims, wherein the optical detecting system further comprises an optical collecting system (12) allowing the light rays from the first and the second reflected portion to be focused onto the photodiode.

8. The lidar system according to any one of the preceding claims, wherein each diffractive optical component is an integrated optical circuit comprising waveguides (20) that open onto exit faces of the integrated optical circuit and divergent lenses (21) on the exit faces.

9. The lidar system according to any one of the preceding claims, wherein the one or more laser sources each emit a total laser power higher than 1 W.

10. The lidar system according to any one of the preceding claims, wherein the laser assembly is an optical parametric oscillator comprising a single laser source (21) that pumps a birefringent crystal (23) placed in an optical cavity (22) and configured to emit radiation having a first wavelength and a second wavelength different from the first wavelength, the laser assembly in addition being configured to vary said first and second wavelengths as a function of time so as to form said first and second wavelength combs, respectively.

11. The lidar system according to any one of claims 1 to 9, wherein the laser assembly comprises two laser sources, a first laser source emitting said first beam and a second laser source emitting said second beam.

12. The lidar system according to the preceding claim, wherein the first laser source is a wavelength-tunable laser source (31) configured to emit radiation having a first wavelength and to vary said first wavelength as a function of time so as to form said first wavelength comb and wherein the second laser source is a wavelength-tunable source (32) configured to emit radiation having a second wavelength and to vary said second wavelength vary as a function of time so as to form said second wavelength comb.

13. The lidar system according to claims 3 and 10, wherein each laser source is a mode-locked pulsed laser source, said wavelength combs being emitted simultaneously.

14. A method of use of a lidar system, comprising the following steps:

> a. emitting a first laser beam having a first comb of separate wavelengths $\lambda_i$, $i \in [1;m]$ and a second laser beam having a second comb of separate wavelengths $\lambda_j$, $i \in [n;p]$ different from those of the first beam;
> b. diffracting, by a first optical component, the first laser beam toward a scene to be observed in one different direction $\theta_i \in [1;n]$ for each wavelength $\lambda_i$ of the first comb, said directions being located in one and the same so-called azimuthal plane;
> c. diffracting, by a second optical component, the second laser beam toward the scene to be observed in one different direction $\phi_j \in [n;p]$ for each wavelength $\lambda_j$ of the second comb, said directions being located in one and the same so-called elevation plane;
> d. detecting a portion of the first beam reflected by the scene to be observed, called the first reflected portion, and a portion of the second beam reflected by the scene to be observed, called the second reflected portion,
> e. generating a signal comprising the beats of each wavelength $\lambda_i$ of the first reflected portion with each wavelength $\lambda_j$ of the second reflected portion
f. determining the position and/or the radial speed of objects present in the scene to be observed, on the basis, at least, of the one or more beat frequencies comprised in said signal.

[FIG.1]

Figure 1

[FIG.2A]

Figure 2A

[FIG.2B]

Figure 2B

[FIG. 3]

Figure 3

[FIG. 4]

Figure 4

[FIG. 5]

Figure 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2018052378 A
- DE 102015225863
- US 20170269215 A1
- WO 2017132704 A1
- US 2019257927 A1
- CN 209417296 U
- US 2019383940 A1